# EUROPEAN PATENT SPECIFICATION

(11) **EP 2 592 334 B1**
(45) Date of publication and mention of the grant of the patent: **08.01.2014**
(21) Application number: 11188609.9
(22) Date of filing: 10.11.2011
(51) Int. Cl.: F21V 5/08, G02B 27/09

(54) **Lighting for a car parking**
Beleuchtung für einen Parkplatz
Éclairage pour parc de stationnement

(43) Date of publication of application: 15.05.2013
(73) Proprietor: Hella KGaA Hueck & Co., 59552 Lippstadt (DE)
(72) Inventor: Möller, Dennis, 59557 Lippstadt (DE)
(74) Representative: Lohr, Georg

(56) References cited:
- WO-A1-2009/122335
- WO-A1-2010/135845
- US-A1- 2011 235 338

## Description

### Field of the invention

The invention relates to lighting of car parkings. The invention relates in particular to a LED-light for a car parking comprising at least a support for at least one LED and at least a lens with a light entrance surface and an opposed light exit surface, the light entrance surface comprising at least a concave section forming a dome over the LED.

### Description of the related art

Car parking garages typically have driving lanes between two rows of rectangular parking spaces. The longitudinal direction of the parking spaces is mostly orthogonal to the longitudinal direction of the driving lane. The driving lanes have a typical width of about 6m and each parking space has a typical geometry of about 2,5m x 5m. The lanes and the parking spaces need to be lighted, in Europe the lighting must comply with DIN EN 12464-1. For lighting garages mostly ceiling mounted neon tube lamps are in use. These tube lamps are mostly positioned above the border between the driving lane and the parking spaces and tubes are oriented parallel to the longitudinal direction of the driving lane. These tube lamps provide a radial symmetric or elliptic light intensity distribution, thereby lighting the lane brighter as necessary and the farther edges of the parking spaces with a relatively low intensity. Such light distribution is disadvantageous, because the high intensity on the driving lane tends to glare drivers on the driving lane and the relative dark parking spaces make people feel unsafe.

WO 2011/042837 discloses a LED light for lighting a street. The LED light comprises a lens with a concave light entrance surface and a convex light exit surface. The light entry surface forms a dome like lodging for a LED below its center. Light from the LED enters the light entry surface and is directed by total reflection at an opposed surface towards the light exit surface to form an asymmetric beam shape.

EP 2 039 985 A2 discloses a LED street lamp with a light guide, made of some transparent plastic. The light guide has three entry surfaces for coupling light of a single LED into the light guide. From each of the entry surfaces is the light guided to a separate light exit surface, to thereby obtain an asymmetrical light distribution by almost three independent light beams.

US 2009/0225551 A1 discloses a lens for a street light. The lens has a planar light entrance surface and an opposed light exit surface. The light exit surface has first and second curved surfaces with different curvatures for forming an asymmetrical light intensity distribution.

US2011/235338 A1 discloses a lighting device with a light source defining an optical axis. A lens is positioned in front of the light source. The lens has concave light entry surface spanning over the light source. The light exit surface resembles a constricted pillow having a symmetry plane A-A'. The light source's optical axis coincides with the symmetry plane but is not centered with respect to a cross section of the lens along the symmetry plane.

WO 2009/122335 A1 discloses a lighting device with an elongated lens having a concave light entrance surface and a convex light exit surface. The elongated lens has a symmetric cross section and is positioned in front of an array of LEDs. The LED's optical axes are parallel but spaced from the plane of symmetry of the elongated lens.

WO 2010/135845 A1 discloses a lighting device for homogenously lighting a rectangular surface. The lighting device comprises a semiconductor light source with an optical axis. In front of the light source is a lens, having a concave light entrance surface being symmetric to the light source's optical axis. The light exit surface is as well symmetric with respect to the light source's optical axis and has a concave center section being surrounded by a convex surrounding section.

### Summary of the invention

The problem to be solved by the invention is to provide a ceiling mounted garage light for replacement of the standard neon tube lamps that permits a better light distribution than the neon tube lamps. The light should be positioned at the same place as the neon tube lamps, i.e. above the line separating the driving lane and the parking spaces.

A solution of the problem is described by the independent claim. The dependent claims relate to further improvements of the invention.

The light for a car parking comprises at least a support for at least one light source with an optical axis. The light source is preferably a LED. Light from the light source is collected by a light entrance surface of the lens and leaves the lens via an opposed light exit surface. The light entrance surface has at least a concave section forming a dome with a center. The light source is positioned such that its optical axis does not intersect with the center of the dome, thereby a part of the light emitted by the LED on the side on which the center of the dome is, enters a section of the light entrance surface located between the optical axis and the dome center. When entering this section of the light entrance surface the light is refracted towards the optical axis, such that at least part of the refracted light crosses the optical axis. Thus, light that would usually leave the lens on a first side of the LED's optical axis can be emitted on an opposite side, without any additional reflection. For example light that was emitted by the light source in a direction towards the driving lane is refracted in a direction towards the parking spaces. The lens or the light, respectively thus permits to "draw" light intensity form the driving lane and direct it to the parking space(s).

The light exit surface preferably comprises at least a first convex section forming a first lobe with a center at the fist side of the optical axis and a second convex section forming second lobe at a second side of the optical axis. The second lobe has a falling section between its center and the second lobe. The falling section is preferably at least partly at the first side of the optical axis, thereby refracting light exiting the lens via the falling section at the first side of the optical axis to cross the optical axis. Thus part of the light, which propagates in the lens on the first side of the light source's optical axis and having a direction facing away from the optical axis leaves the lens with propagation direction towards the optical axis and faces away from the optical axis at the second side of the optical axis, after passing the optical axis. This permits to direct even more light across the optical axis of the light source.

The entrance surface is at least at the second side of the optical axis Fresnel like stepped. This permits to gain space for the light source and at the same time to keep the lens thin, resulting in reduced production costs and low absorption.

The lens may have a planar mounting surface between the light entry surface and the light exit surface. The mounting surface is preferably parallel to the support and preferably orthogonal to the optical axis of the light source.

In the following the invention will be described by way of example, without limitation of the general inventive concept, on examples of embodiment with reference to the drawings.
Figure 1 shows a first isometric depiction of a lens.
Figure 2 shows a second isometric depiction of the lens.
Figure 3 shows a cross section along plane III of the lens.
Figure 4 shows a cross section along plane III of the lens.
Figure 5 shows a longitudinal section along plane V of the lens.
Figure 6 shows a longitudinal section along plane V of the lens.
Figure 7 shows a parking level of a garage

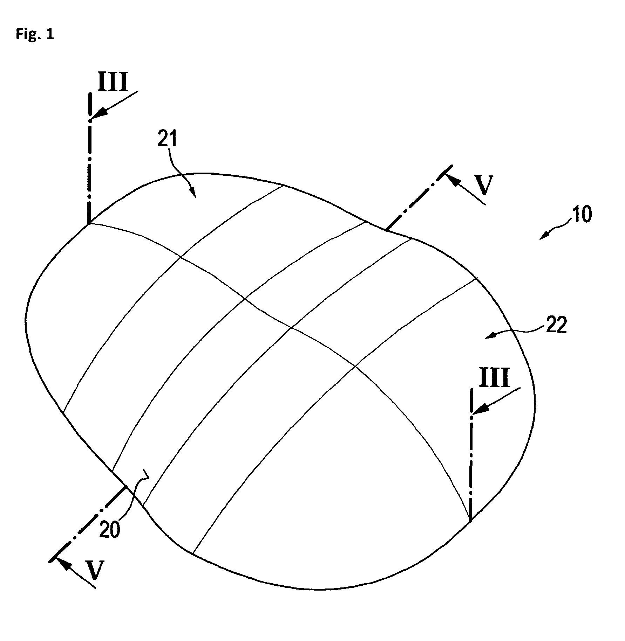

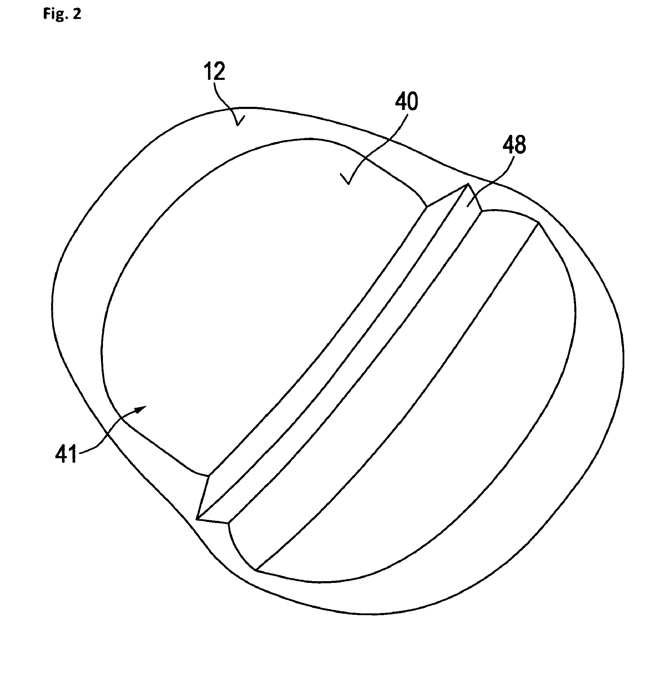

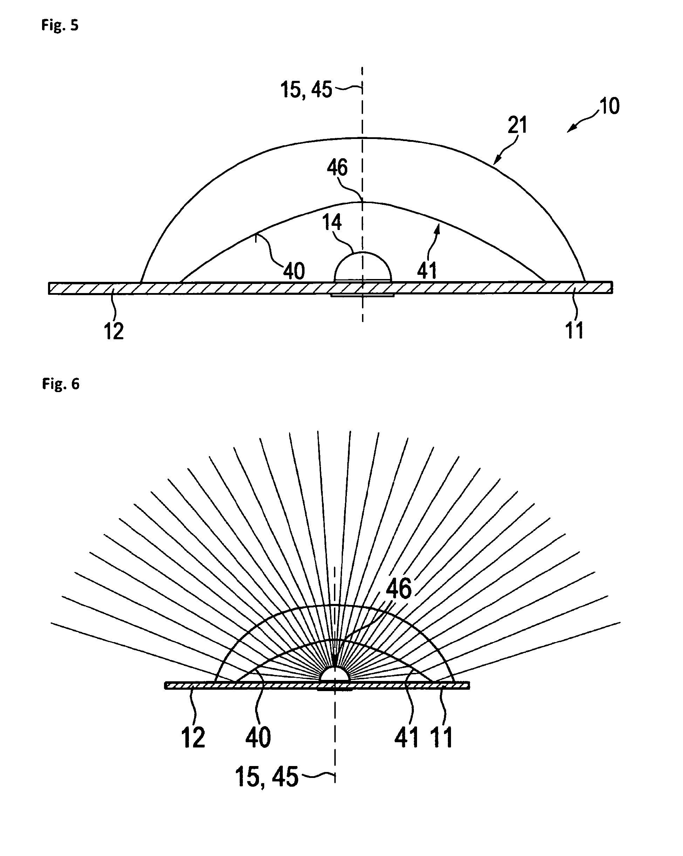

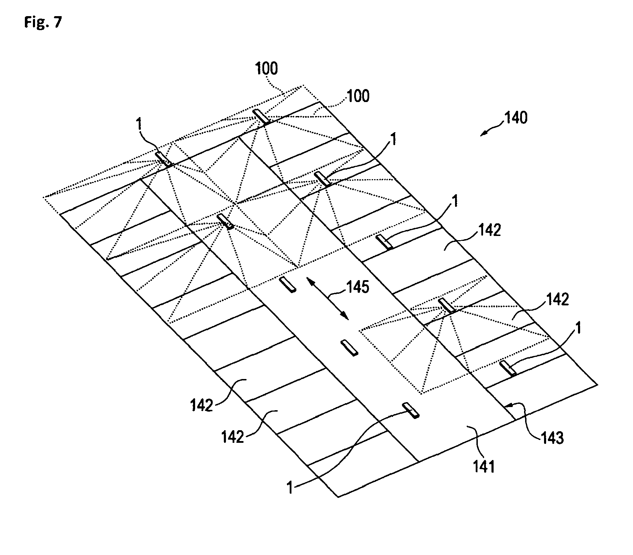

Figure 1 shows the light exit surface 20 of a lens 10. The light exit surface 20 has a first lobe 21 and a second lobe 22 for refracting light asymmetrically when leaving the lens through the light exit surface. The plane V is parallel to the longitudinal direction of the lens, i.e. as indicated in figure 7 is the plane V parallel to a driving lane 62. Included in a ceiling mounted lamp 1 (cf. fig. 7) the exit surface faces the floor. The light entrance surface 40 faces a light source, e.g. a LED. The light entrance surface is depicted in figure 2 and surrounded by a planar mounting surface 12. The light entrance surface is concave and forms a dome 41. The light entrance surface 40 is in its longitudinal direction Fresnel like stepped, i.e. has Fresnel steps 48. This permits to reduce the thickness of the lens and enlarge the space "below" the dome (cf. figures 5 and 6).

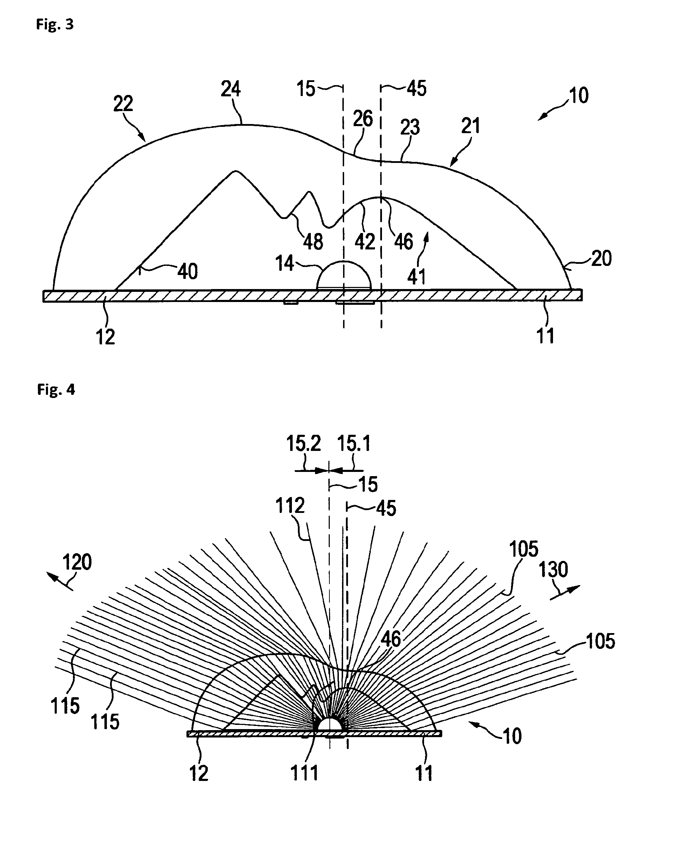

In the cross section as depicted in figure 3, the lens is mounted on a support 11. The concave light entrance surface 40 forms a dome 41. The dome 41 has a center 46, which would correspond to its highest point if one would "unfold" the Fresnel stepping 48 of the dome to its optically equivalent smooth surface. A dome axis 46 intersects the dome's center 46.

Below (with respect to the orientation in figures 3 and 4) the dome 41 is a light source 14, with lambertian intensity distribution, for example a LED 14. The light source 14 has an optical axis 15, which coincides with the direction of the maximum of the light source's 14 intensity distribution. The light source is positioned relative to the dome 41, such that the optical axis 15 is parallel displaced relative dome axis 45.

The light exit surface 20 has a first lobe 21 and second lobe 22. The first lobe 21 has a first lobe center 23 and the second lobe 22 a second lobe center 24. Between the second lobe center 24 and the first lobe center 21 is falling section 26 of the second lobe 22. A part of the falling section 26 is between the optical axis 15 and the dome axis 45.

The above explained lens and light source geometry yields the optical paths as symbolized by sets of rays 105, 111,112, 115 in figure 4. The rays 105, 111, 112, 115 start from the light source in accordance with Lambert's law. The rays 111,112 and 105 are emitted on a first side 15.1 of the optical axis 15 (with respect to figure 4 the right side). A first set of rays 105 crosses the dome axis 46 and subsequently enters the entrance surface 40. The lens 10 refracts the first set of rays 105 in a first direction 130 pointing away from the optical axis first side 15.1. The first set of rays 105 may preferably be directed towards a driving lane 141 (cf. figure 7).

The rays 111 and 112 are as well emitted on the first side 15.1 of the optical axis 15 but they enter a section 42 of the light entrance surface 40 which is located between the dome axis 45 and the optical axis 15. This section 42 descends from the dome center 46 towards the optical axis 15 and the rays 111, 112 are thus refracted towards the optical axis 15 when entering the lens 10 via section 42. Ray 111 is refracted in a direction which intersects with the optical axis 15. Rays 111, 112 exit the lens 10 via the falling section 26 of the second lobe 22 and are thus further refracted towards direction 120. When passing the falling section 26 ray 112 is as well directed to cross the optical axis 15. Thus the depicted lens 10 and light source 14 arrangement permits to direct light that was emitted on a first side 15.1 of the optical axis 15 in a direction facing away from the opposite side, i.e. second side 15.2 of the optical axis 15 without reflecting elements.

A fourth set of rays 115 is emitted on the second side 15.2 of the optical axis and leaves the lens 10 in direction facing away from the second side 15.2 pointing at least essentially in the direction 120, e.g. towards a parking surface 142.

In the plane V, as shown in figures 5 and 6 is the lens symmetric to the optical axis 15 and the dome axis 46. Accordingly the light provides in this plane a symmetrical intensity distribution (cf. figure 6).

Figure 7 symbolizes a parking level of parking garage. The parking level 140 has a driving lane 141 in between of rows of parking surfaces 142. The line 143 separates the driving lane 143 from the parking surfaces 142. Above each line 143 is a row of lights 1, lighting the driving lane 141 and the adjacent parking surfaces 142 as indicated by rays 100, such that driving lane 141 and the parking surfaces 142 appear at least substantially equally bright. The lights 1 include the lens 10 and light source 14 combination as explained with respect to figures 1 to 6.

### List of reference numerals

- 10: lens
- 11: support
- 12: mounting surface
- 14: light source / LED
- 15: optical axis
- 20: light exit surface
- 21: first lobe
- 22: second lobe
- 23: center of first lobe
- 24: center of second lobe
- 26: falling section of second lobe
- 40: light entrance surface
- 41: dome
- 42: section of dome / light entrance surface between optical axis and center of dome
- 45: dome axis
- 46: center of dome
- 48: Fresnel structure
- 100: rays
- 105: first set of rays
- 111: second set of rays
- 112: third set of rays
- 115: fourth set of rays
- 120: direction to parking surface
- 130: direction to driving lane
- 140: parking level
- 141: driving lane
- 142: parking surfaces
- 143: separation of driving lane 141 from parking surfaces 142
- 145: longitudinal direction

## Claims

1. A light (1) for a car parking comprising
- a support (11) for at least one light source (14) with an optical axis (15), and
- at least a lens (10) with a light entrance surface (40) and an opposed light exit surface (20), the light entrance surface (40) comprising at least a concave section forming a dome (41) over the light source (14) for receiving light from the light source (14),
wherein
the light source (14) is positioned such that its optical axis (15) does not intersect the center (46) of the dome (41), thereby a part of the light emitted by the light source (14) on a first side (15.1) of the optical axis (15) is refracted when entering the light entrance surface (40) to intersect the optical axis (15)
**characterized in that**
the light entrance surface (40) is at least at the second side (15.2) of the optical axis (15) Fresnel like stepped.

2. The light of claim 1,
**characterized in that**
the light exit surface (20) comprises at least a first convex section forming a first lobe 21 at the fist side (15.1) of the optical axis (15) and a second convex section forming second lobe (22) with a center (24) at a second side (15.2) of the optical axis, wherein the second lobe (22) has a falling section (26) between its center (24) and the first lobe (21), the falling section being (26) at least partly at the first side (15.1) of the optical axis (15), thereby refracting light exiting the falling section (26) at the first side (15.1) of the optical axis (15) to cross the optical axis (15.2).

3. The light of any one of the preceding claims
**characterized in that**
the light source is a LED (14).

4. LED-light of any one of the preceding claims
**characterized in that**
the lens (10) has a planar mounting surface (12) between the light entry surface (40) and the light exit surface (20), the mounting surface being parallel to the support (11).

## Patentansprüche

1. Licht (1) für einen Autoparkplatz, umfassend
- einen Träger (11) für wenigstens eine Lichtquelle (14) mit einer optischen Achse (15), und
- mindestens eine Linse (10) mit einer Lichteintrittsfläche (40) und einer gegenüber angeordneten Lichtaustrittsfläche (20), wobei die Lichteintrittsfläche (40) wenigstens einen konkaven Abschnitt aufweist, der eine Kuppel (41) über der Lichtquelle (14) zum Empfang von Licht von der Lichtquelle (14) bildet,
wobei
die Lichtquelle (14) so positioniert ist, dass ihre optische Achse (15) nicht die Mitte (46) der Kuppel (41) schneidet, wodurch ein Teil des von der Lichtquelle (14) auf einer ersten Seite (15.1) der optischen Achse (15) emittierten Lichtes gebrochen wird, wenn es auf die Lichteintrittsfläche (40) trifft, um die optische Achse (15) zu schneiden,
**dadurch gekennzeichnet, dass**
die Lichteintrittsfläche (40) wenigstens auf der zweiten Seite (15.2) der optischen Achse (15) Fresnel-artig abgestuft ist.

2. Licht gemäß Anspruch 1,
**dadurch gekennzeichnet, dass**
die Lichtaustrittsfläche (20) wenigstens einen ersten konvexen Abschnitt umfasst, der einen ersten Lappen (21) auf der ersten Seite (15.1) der optischen Achse (15) bildet, und einen zweiten konvexen Abschnitt umfasst, der einen zweiten Lappen (22) mit einer Mitte (24) auf einer zweiten Seite (15.2) der optischen Achse bildet, wobei der zweite Lappen (22) einen fallenden Abschnitt (26) zwischen seiner Mitte (24) und dem ersten Lappen (21) aufweist, wobei der fallende Abschnitt (26) wenigstens teilweise an der ersten Seite (15.1) der optischen Achse (15) angeordnet ist, wodurch das Licht gebrochen wird, das aus dem fallenden Abschnitt (26) an der ersten Seite (15.1) der optischen Achse (15) austritt, um die optische Achse (15.2) zu kreuzen.

3. Licht eines der vorangehenden Ansprüche,
**dadurch gekennzeichnet, dass**
die Lichtquelle eine LED (14) ist.

4. LED-Licht gemäß einem der vorangehenden Ansprüche,
**dadurch gekennzeichnet, dass**
die Linse (10) eine ebene Montagefläche (12) zwischen der Lichteintrittsfläche (40) und der Lichtaustrittsfläche (20) aufweist, wobei die Montagefläche parallel zum Träger (11) angeordnet ist.

## Revendications

1. Une lumière (1) pour un parking de voitures comprenant
- un support (11) pour au moins une source de lumière (14) avec un axe optique (15) et
- au moins une lentille (10) avec une surface d'entrée de lumière (40) et une surface de sortie de lumière opposée (20), la surface d'entrée de lumière (40) comprenant au moins une section concave formant un dôme (41) sur la source de lumière (14) pour recevoir de la lumière à partir de la source de lumière (14),
où
la source de lumière (14) est positionnée de sorte que son axe optique (15) ne soit pas en intersection avec le centre (46) du dôme (41), par conséquent une partie de la lumière émise par la source de lumière (14) sur un premier côté (15.1) de l'axe optique (15) est réfractée en entrant dans la surface d'entrée de la lumière (40) pour être à l'intersection avec l'axe optique (15)
**caractérisé en ce que**
la surface d'entrée de la lumière (40) est au moins sur le deuxième côté (15.2) de l'axe optique (15) gradué comme une lentille Fresnel.

2. La lumière de la revendication 1,
**caractérisée en ce que**
la surface de sortie de la lumière (20) comprend au moins une première section convexe formant un premier lobe 21 sur le premier côté (15.1) de l'axe optique (15) et une deuxième section convexe formant un deuxième lobe (22) avec un centre (24) sur un deuxième côté (15.2) de l'axe optique, où le deuxième lobe (22) a une section tombante (26) entre son centre (24) et le premier lobe (21), la section tombante étant (26) au moins partiellement sur le premier côté (15.1) de l'axe optique (15) réfractant ainsi la lumière sortant de la section tombante (26) sur le premier côté (15.1) de l'axe optique (15) pour traverser l'axe optique (15.2).

3. La lumière de l'une des revendications précédentes car
actérisée en ce que
la source de lumière est une DEL (14).

4. La lumière DEL de l'une des revendications précédentes
**caractérisée en ce que**
la lentille (10) possède une surface de montage plane (12) entre la surface d'entrée de la lumière (40) et la surface de sortie de la lumière (20), la surface de montage étant parallèle au support (11).
